# EUROPEAN PATENT SPECIFICATION

(11) **EP 4 474 223 B1**
(45) Date of publication and mention of the grant of the patent: **08.04.2026**
(21) Application number: 24315264.2
(22) Date of filing: 03.06.2024
(51) Int. Cl.: B60R 16/023, H02G 3/16

(54) **IMPROVED ELECTRIC BOX FOR A VEHICLE**
VERBESSERTER ELEKTRISCHER KASTEN FÜR EIN FAHRZEUG
BOÎTIER ÉLECTRIQUE AMÉLIORÉ POUR VÉHICULE

(30) Priority: 09.06.2023 IT 202300011874
(43) Date of publication of application: 11.12.2024
(73) Proprietor: IVECO FRANCE S.A.S., 69200 Vénissieux (FR)
(72) Inventor: Leparc, Benjamin, 69200 VENISSIEUX (FR); Cailleaud, Dany, 69200 VENISSIEUX (FR)
(74) Representative: Studio Torta S.p.A.

(56) References cited:
- CN-A- 105 539 157
- CN-U- 217 545 319
- CN-U- 218 415 356
- DE-A1- 102021 126 411

## Description

### TECHNICAL FIELD

The present invention concerns an electric box for a vehicle.

The present invention finds its preferred, although not exclusive, application in electrical vehicles such as public transport vehicles. Reference will be made to this application by way of example below.

### BACKGROUND OF THE INVENTION

Vehicles, such as public transport vehicles, tends to be more and more electrified in order to reduce the pollution due to internal combustion engine. To this end, hybrid and electric vehicles are more and more used and developed.

Hybrid and electric vehicles need to transfer electric energy between electric machines and energy storing means and other electric-based devices of the vehicle.

Therefore, it is requested to provide high voltage electrical cables between the aforementioned elements to transfer the electrical energy.

Such electrical cables may need to change direction or split their provided energy to multiple cables. In such case it is needed to use an electrical junction box to allow the passage of electric flow between the different requested ways.

Existing junction box are bulky due to the need of avoiding undesired contacts or electric bridges between electric junctions contained herein.

Moreover, it is needed to provide safer junction box with respect to existing ones that have no physical separation between the different cables connected by the junction box.

Therefore, the need is felt to reduce encumbrance of existing electric junction boxes for electric vehicles and to increase their safety thereby maintaining their operative function.

Known systems are disclosed in patent publications DE102021126411 disclosing an electric box according to the preamble of claim 1, or CN218415356 U, CN217545319 U or CN105539157 A.

An aim of the present invention is to satisfy the above mentioned needs in a cost-effective and optimized manner.

### SUMMARY OF THE INVENTION

The aforementioned aim is reached by an electric box as claimed in the appended set of claims.

### BRIEF DESCRIPTION OF DRAWINGS

For a better understanding of the present invention, a preferred embodiment is described in the following, by way of a non-limiting example, with reference to the attached drawings wherein:

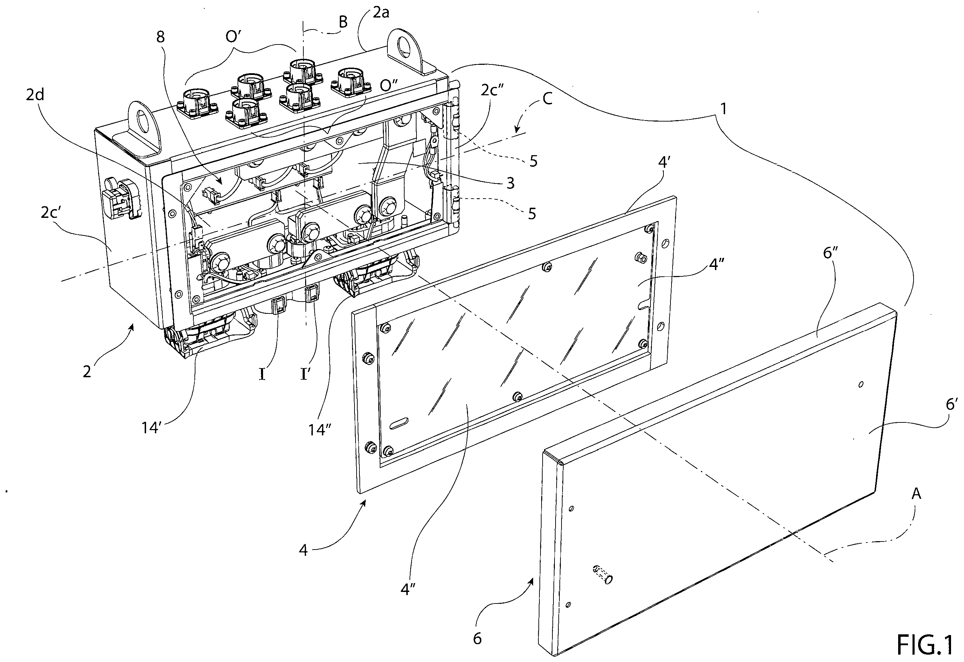

- Figure 1 is a perspective exploded schematic view of an electric box according to the invention;

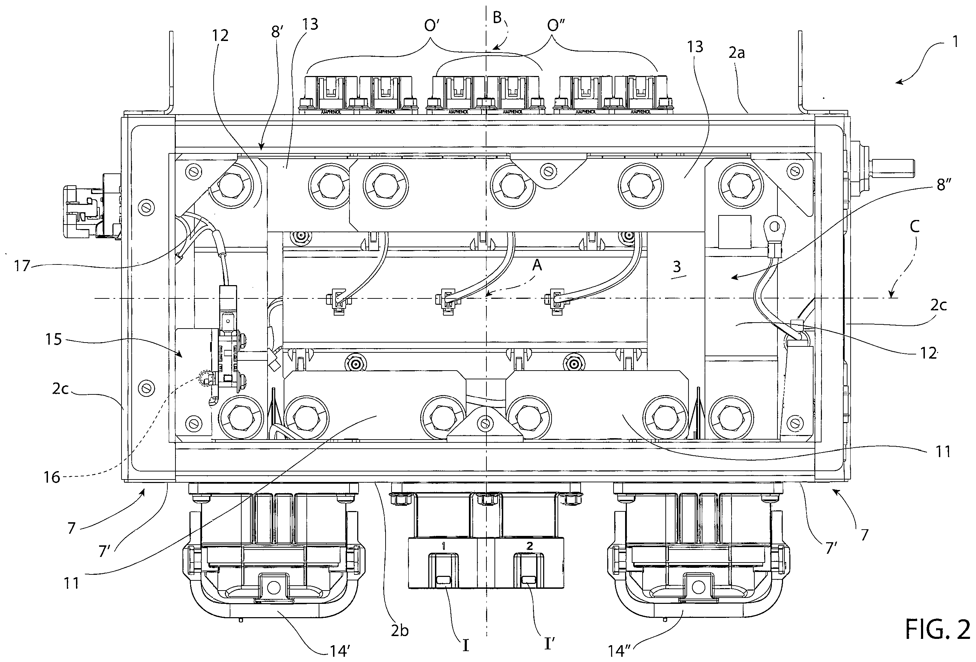

- Figure 2 is a front schematic view of the electric view of Figure 1 with parts removed for sake of clarity;

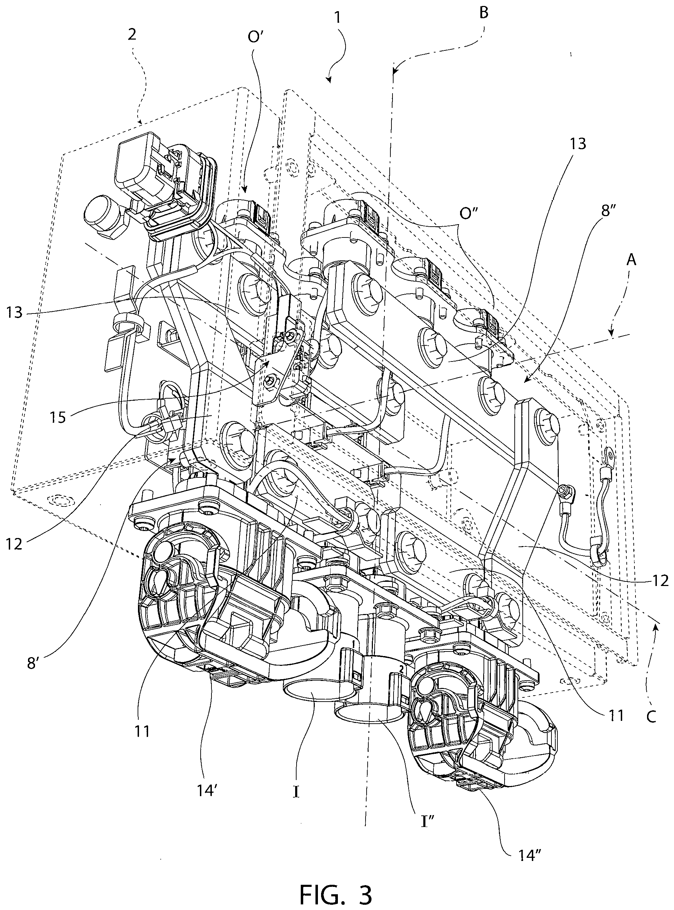

- Figure 3 is bottom perspective schematic view of the electric box of Figure 1 with parts removed for sake of clarity; and
- Figure 4 is a perspective enlarged view of a portion of the electric box according to the invention.

### DETAILED DESCRIPTION OF THE INVENTION

Drawings shown an electric box 1 according to the invention configured to allow distribution of electrical energy between at least one first electric socket I', I" configured to allow electrical connection with a related at least one first electrical cable and at least one second electric socket O', O" configured to allow electrical connection with a related at least one second electrical cable.

In particular, electric box 1 may be used in a vehicle for distribution of electrical energy between electrical cables connecting energy storing means, electric machine and electric devices of the vehicle, that is therefore, preferably, a hybrid or an electric vehicle.

In detail, in the shown embodiment, the electric box 1 is configured to allow electric energy distribution between a pair of first electric sockets I', I" and two lines of second electric sockets O', O", wherein each line comprises, as exemplarily shown, three electric sockets.

The electric box 1 comprises in particular a support structure 2 configured to delimit a space 3 isolated from the external environment, at least selectively.

In detail, the structure 2 has substantial a parallelepiped shape provided with a top and a bottom walls 2a, 2b faced with respect toa vertical axis B perpendicular to a longitudinal axis A of the structure 2, a pair of lateral walls 2c', 2c" faced with respect to a transversal axis C perpendicular to both longitudinal and vertical axis A, B.

The structure 2 further comprises a rear wall 2d and, a closure arrangement 4 faced to this latter along longitudinal axis A and configured to assume a first, opened, configuration wherein allows to reach space 3 from the external environment and a second, closed, configuration, wherein isolate the space 3 from the environment.

The aforementioned pair of first electric sockets I', I" and two lines of second electric sockets O', O" are advantageously realized respectively on the bottom wall 2b and on the top wall 2a.

More preferably, the pair of first electric sockets I' is realized in a central portion of the bottom wall 2b with respect to longitudinal and transversal axis A, C and similarly the two lines of second electric sockets O', O" are realized centered on the top wall 2a with respect to longitudinal and transversal axis A, C.

In further detail, the two lines of second electric sockets O', O" are staggered along transversal direction axis C one with respect to the other so that two electric sockets of the two lines of second electric sockets O', O" are not collinear to an axis parallel to axis A.

In particular, closure arrangement 4 comprises a frame 4' and a transparent wall 4" carried within the frame 4'. The frame 4' is configured to be carried by one of the aforementioned walls 2a, 2b, 2c', 2c" in a movable manner, e.g. by hinge means 5 that are, in the disclosed embodiment, realized on one of lateral walls 2c', 2c". Preferably, transparent wall 4" is made of plexiglass.

The electric box 1 further comprises a cover arrangement 6 configured to assume a first configuration into which may allow, via closure arrangement 4, to reach space 3 form environment and a second configuration into which avoid to access to the closure arrangement 4, i.e. to space 3.

In detail, cover arrangement 6 comprises a front wall 6' and a perimetral flange 6" extending on at least part of perimeter of the front wall 6'' and shaped in order to surround entirely the cover arrangement 4 and fix this latter to structure 2.

In detail, the perimetral flange 6'' is fixed to structure 2 via fixing means, such as threaded elements, configured to insert in holes provided in the perimetral flange 6", passing through the frame 4' of the cover arrangement 4 and in seats realized in walls 2a, 2b, 2c', 2c'' of the structure 2, in details in flange portions extending through this latter.

The electric box 1 further comprises a fixing means 7 configured to allow the fixing of electric box 1 to a vehicular portion (not shown). In detail, the fixing means 7 may comprise a holes 7' carried by one of walls of structure 2 and suitable for allowing the insertion of fixing means, such as threaded elements, for fixing the structure 2 to the aforementioned vehicular portion.

In the exemplarily shown embodiment, the holes 7' are realized in the bottom wall 2b of the structure 2.

The electric box 1 houses in space 3 a conductive disposition 8 configured to allow electrical connection between the at least one first electric socket I', I" and the at least one second electric socket O', O".

In the disclosed embodiment, the conductive disposition 8 allows to provide electrical connection between the first electric socket I' the first line of second electric sockets O' via a first conductive path 8' and between the first electric socket I' the first line of second electric sockets O' via a second conductive path 8".

In detail, each conductive path 8', 8" comprises three conductive elements 11, 12 and 13 electrically connected together. Preferably, each conductive element 11, 12, 13 comprises a plate-like element such as a lamina realized in metallic material such as copper.

In further detail, such lamina are parallel to a plane containing vertical and transversal axis B, C.

In detail, conductive paths 8', 8" are equal, i.e. they define the same path along axis A, B, C. In further detail, conductive paths 8', 8" are symmetric with respect vertical axis B and are spaced along longitudinal axis A.

In particular, the conductive elements 11, 12, 13 are connected each other and/or to the at least one first electric socket I', I" and/or to the at least one second electric socket O', O" via electric fixing connections such as threaded connections realized in metallic material.

In detail, each first conductive element 11 extends parallel to the transversal axis C towards the lateral wall 2c' opposite to the other first electric socket I', I". The second conductive element 12 extends vertically from near the bottom wall 2b towards the top wall 2c. Then, the third conductive element 13 extends again along transversal axis C direction back opposite to the extension direction of the first conductive element 11 to reach the respective second electric socket line O', O".

In detail, the second conductive element 12 comprises a pair of terminal portions that are parallel to vertical axis B and an intermediate portion that is inclined. In particular, the two inclined portions of the second conductive elements 12 are inclined in order to come closer to respectively the rear wall 12d or the closing arrangement 4.

According to the above, one of the terminal portions of the second conductive elements 12 are contained in a plane parallel to a plane containing first and third conductive elements 11, 13. In particular, one of the terminal portions of the second conductive element 12 may be contained in the same plane containing first and third conductive elements 11, 13.

Always according to the above-described geometry, the first and third conductive elements are contained into two different planes that are parallel one with respect to the other and distanced along longitudinal directions.

In particular, first and second conductive elements 11, 12 are connected by electric bridges 14', 14". Electric bridges 14', 14'' are configured to connect electrically first and second conductive elements 11, 12 indirectly, i.e. by means of electric components (not shown) that can allows, selectively, their electric disconnection. This connection is clearly different with respect to connection between second and third conductive elements 12, 13 that are always electrically connected one to the other.

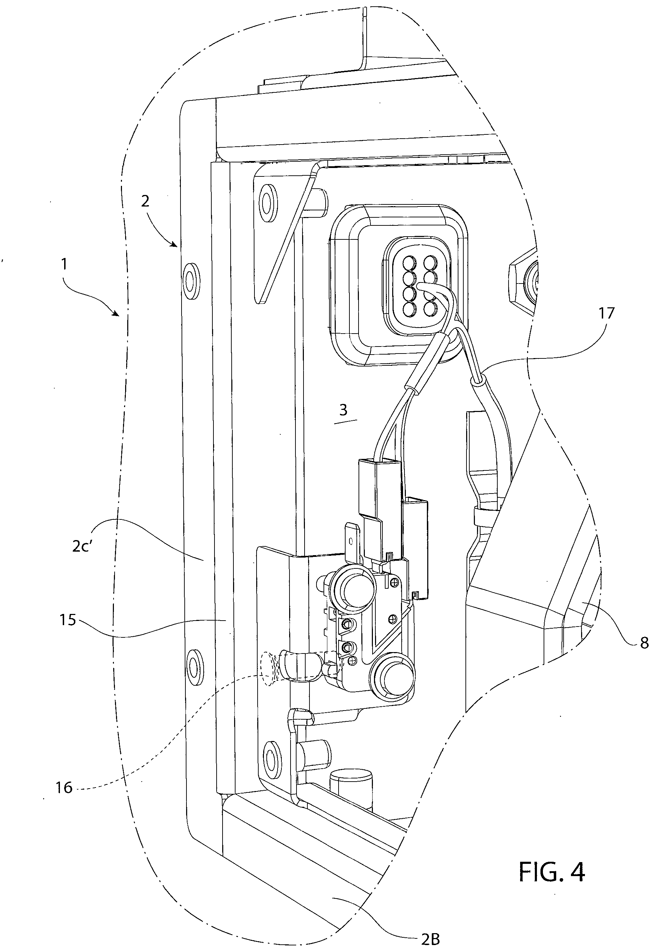

In detail, as best shown in figures 4, the electric box 1 further comprises safety means 15 configured to selectively avoid, i.e. interrupt, electric communication between the at least one first electric socket I', I" and to the at least one second electric socket O', O" if the cover arrangement 6 is detached from structure 2.

In particular, according to the above described embodiment, safety means 15 may avoid, i.e. interrupt, the electric communication in both of paths 8', 8" of the conductive disposition 8.

In particular, the safety means 15 comprises pin 16 configured to assume a first position, inserted, in which cooperates at contact with a portion of an electric circuit 17 that allows electric communication in the conductive disposition 8, i.e. electrically connecting first and second conductive elements 11, 12, and a second position, extracted, in which frees open a portion of electric circuit 17 thereby denies electric communication in said conductive disposition u, i.e. decoupling electrically first and second conductive elements 11, 12.

Preferably, the above electric coupling or decoupling is achieved by electric circuit 17 and the aforementioned electric bridges 14', 14".

In particular, the pin 16 is fixedly carried to cover arrangement 6, in particular by the front wall 6', so that when the cover arrangement 6 is extracted from the structure 2, the conductive disposition 8 cannot cooperate at contact with electric circuit 17. In this way pin 16 acts as a button.

The operation of the embodiment of the invention as described above is the following.

When fixed to the vehicle via fixing means 7, the necessary electrical cables (not shown) are connected to the at least one first electric socket I', I" and to the at least one second electric socket O', O". Electrical energy usually coming from the first electric socket I', I" flow via conductive disposition 8 towards the second electric socket O', O". In detail, the electrical energy flow via first, second and third electric elements 11, 12, 13, passing via electric bridges 14', 14", towards the second electric socket lines O', O".

If the user moves the cover arrangement 6 from structure 2, then pin 16 is extracted from its seat and therefore open the electric circuit 17 that decoupler the elements of the conductive disposition 8 thereby avoiding any possible electric injury.

In view of the foregoing, the advantages of the electric box according to the invention are apparent.

Thanks to the described electric box according to the invention is possible to provide an electric junction between electric cables in a very compact and small space.

The proposed conductive disposition allows to provide in a very small space and with small laminas the transfer of high electrical energy flow.

In detail the proposed conductive disposition allows to support 800 A at 1000V for 15 minutes with an outside temperature of 65°C as required by normative without lack of insulation and with optimal behavior from thermal point of view.

Moreover, the proposed safety system allows to decoupler the first and second electric sockets if the cover is removed from electric box thereby avoiding undesired electric transmission that may lead to fatal injuries.

Indeed, the proposed safety system is fully integrated into the proposed conductive disposition and is intrinsically safe because cannot bypassed by the user.

It is clear that modifications can be made to the described electric box which do not extend beyond the scope of protection defined by the claims.

For example, the proposed shape of the cover may be varied according to the specific need and typology of vehicle.

Moreover, the number and shape of conductive elements of the conductive disposition and the number and typology of electrical sockets or they disposition on the structure may be varied.

Furthermore, the proposed safety means may be realized in a different manner with equivalent function of interrupting electrical communication within paths of the conductive disposition.

## Claims

1. Electric box (1) for connecting at least one first electric cable to at least a second electric cable, said electric box (1) comprising a structure (2) extending along a longitudinal axis (A), a vertical axis (B) perpendicular to said longitudinal axis (A) and a transversal axis (C) perpendicular to both said longitudinal and vertical axis (A, B) and a cover arrangement (6) carried in a movable manner by said structure (2), said closure arrangement (4) being configured to assume a first, open, configuration wherein a space (3) delimited by said structure (2) may communicate with the environment and a second, closed, configuration wherein said space (3) is isolated from the environment, said electric box (1) comprising at least one first electric socket (I', I") configured to allow connection of said at least one first electric cable and at least one second electric socket (O', O") configured to allow connection of said at least one second electric cable, and a conductive disposition (8) housed within said space (3) and configured to electrically connect said at least one first electric socket (I', I") to said at least one second electric socket (O', O"), said electric box (1) comprising safety means (15) configured to interrupt the electric connection between said at least one first electric socket (I', I") and said at least one second electric socket (O', O") via said conductive disposition (8) if said cover arrangement (6) is in said first configuration,
**characterized in that** said electric box (1) further comprises a closure arrangement (4) comprising a frame (4') movably carried by said structure (2) to assume a first, closed, configuration wherein it isolates said space (3) from the environment and a second, opened, configuration, wherein it allows communication of said space (3) and said environment, said cover arrangement (6) being configured to surround said closure arrangement (4) in said second configuration.

2. Electric box according to claim 1, comprising two first electric sockets (I', I") and two lines of second electric sockets (O', O"), said conductive disposition (8) comprising a first electric path (8') connecting electrically one of said first electric sockets (I', I") to one of said lines of second electric socket (O', O") and a second electric path (8') connecting electrically the other of said first electric sockets (I', I") to the other of said lines of second electric socket (O', O"), said safety means (15) being configured to interrupt the electric connection of both said first and second electric paths (8', 8").

3. Electric box according to claim 2, wherein said first and second paths (8', 8") comprises a plurality of conductive elements (11, 12, 13) electrically connected together.

4. Electric box according to claim 3, wherein said conductive elements (11, 12, 13) are laminas of metallic material.

5. Electric box according to claim 3 or 4, wherein said conductive elements (11, 12, 13) are realized in copper.

6. Electric box according to any of claims 3 to 5, wherein said first and second elements (11, 12) are connected via electric bridges (14', 14").

7. Electric box according to any of the preceding claims, wherein said safety means (15) comprises a pin (16) carried fixedly by said cover arrangement (6) and an electric circuit (17) electrically connected to said conductive disposition (8) said pin (16) being configured to cooperate at contact with said electric circuit (17) in said second configuration of said cover arrangement (6), allowing electric communication in said conductive disposition (8), and configured to be distanced from said electric circuit (17) in said first configuration, denying electric communication in said conductive disposition (8).

8. Electric box according to claim 6 or 7, wherein said electric circuit (17) is electrically connected to said electric bridges (14', 14") and decouples said first and second elements (11, 12) in function of the cooperation of said pin (16) with said electric circuit (17).

9. Electric box according to any of the preceding claims, wherein said closure arrangement (4) comprises a transparent wall (4") fixedly carried by said frame (4') and faced to said space (3) in said second configuration of said frame (4').

10. Electric box according to any of the preceding claims wherein said cover arrangement (6) is selectively fixed to said closure arrangement (4) and to said structure (2) via fixing means.

11. Electric box according to any of the preceding claims, wherein said structure (2) has a parallelepiped shape defined by a top and a bottom wall (2a, 2b) faced along said vertical axis (B), a pair of lateral walls (2c', 2c") faced along said transversal axis (C), a rear wall (2d), said at least one first electric socket (I', I") and said at least one second electric socket (O', O") being realized respectively on said bottom walls (2b) and on said top wall (2a).

12. Electric box according to claims 11 wherein said closure arrangement (4) is faced, in said second configuration to said rear wall (2d).

13. Electric box according to claim 11, wherein said cover arrangement (6) comprises a front wall (6') faced to said rear wall (2d) in said second configuration and a flange portion (6") extending on at least portion of said front wall (6') and configured to allow fixation of said front wall (6') to said structure (2).

14. Vehicle comprising at least one first electric cable and at least a second electric cable connected to different operative elements of said vehicle and an electric box (1) according to any of the preceding claims for electrically connecting together said at least one first electric cable and at least a second electric cable.

## Patentansprüche

1. Elektrischer Kasten (1) zum Verbinden von mindestens einem ersten elektrischen Kabel mit mindestens einem zweiten elektrischen Kabel, wobei der elektrische Kasten (1) eine Struktur (2), die sich entlang einer Längsachse (A), einer vertikalen Achse (B) senkrecht zu der Längsachse (A) und einer Querachse (C) senkrecht zu sowohl der Längsals auch der vertikalen Achse (A, B) erstreckt, und eine Abdeckanordnung (6), die auf bewegliche Weise von der Struktur (2) getragen wird, umfasst, wobei die Verschlussanordnung (4) konfiguriert ist, um eine erste, offene Konfiguration, in der ein von der Struktur (2) begrenzter Raum (3) mit der Umgebung kommunizieren kann, und eine zweite, geschlossene Konfiguration, in der der Raum (3) von der Umgebung isoliert ist, anzunehmen, wobei der elektrische Kasten (1) mindestens eine erste elektrische Steckdose (I', I"), die konfiguriert ist, um eine Verbindung des mindestens einen ersten elektrischen Kabels zu ermöglichen, und mindestens eine zweite elektrische Steckdose (O', O"), die konfiguriert ist, um eine Verbindung des mindestens einen zweiten elektrischen Kabels zu ermöglichen, und eine leitfähige Anordnung (8), die in dem Raum (3) untergebracht und konfiguriert ist, um die mindestens eine erste elektrische Steckdose (I', I") mit der mindestens einen zweiten elektrischen Steckdose (O', O") elektrisch zu verbinden, umfasst, wobei der elektrische Kasten (1) Sicherheitsmittel (15) umfasst, die konfiguriert sind, um die elektrische Verbindung zwischen der mindestens einen ersten elektrischen Steckdose (I', I") und der mindestens einen zweiten elektrischen Steckdose (O', O") über die leitfähige Anordnung (8) zu unterbrechen, wenn sich die Abdeckanordnung (6) in der ersten Konfiguration befindet,
**dadurch gekennzeichnet, dass** der elektrische Kasten (1) ferner eine Verschlussanordnung (4) umfasst, die einen Rahmen (4') umfasst, der beweglich von der Struktur (2) getragen wird, um eine erste, geschlossene Konfiguration, in der er den Raum (3) von der Umgebung isoliert, und eine zweite, geöffnete Konfiguration, in der er eine Kommunikation des Raums (3) und der Umgebung ermöglicht, anzunehmen, wobei die Abdeckanordnung (6) konfiguriert ist, um die Verschlussanordnung (4) in der zweiten Konfiguration zu umgeben.

2. Elektrischer Kasten nach Anspruch 1, umfassend zwei erste elektrische Steckdosen (I', I") und zwei Reihen von zweiten elektrischen Steckdosen (O, O), wobei die leitfähige Anordnung (8) einen ersten elektrischen Pfad (8'), der eine der ersten elektrischen Steckdosen (I', I") mit einer der Reihen der zweiten elektrischen Steckdose (O', O") elektrisch verbindet, und einen zweiten elektrischen Pfad (8'), der die andere der ersten elektrischen Steckdosen (I', I") mit der anderen der Reihen der zweiten elektrischen Steckdose (O', O") elektrisch verbindet, umfasst, wobei die Sicherheitsmittel (15) konfiguriert sind, um die elektrische Verbindung sowohl des ersten als auch des zweiten elektrischen Pfads (8', 8") zu unterbrechen.

3. Elektrischer Kasten nach Anspruch 2, wobei der erste und der zweite Pfad (8', 8") eine Mehrzahl leitfähiger Elemente (11, 12, 13), die elektrisch miteinander verbunden sind, umfasst.

4. Elektrischer Kasten nach Anspruch 3, wobei die leitfähigen Elemente (11, 12, 13) Plättchen aus metallischem Material sind.

5. Elektrischer Kasten nach Anspruch 3 oder 4, wobei die leitfähigen Elemente (11, 12, 13) aus Kupfer realisiert sind.

6. Elektrischer Kasten nach einem der Ansprüche 3 bis 5, wobei die ersten und zweiten Elemente (11, 12) über elektrische Brücken (14', 14") verbunden sind.

7. Elektrischer Kasten nach einem der vorhergehenden Ansprüche, wobei die Sicherheitsmittel (15) einen Stift (16), der fest von der Abdeckanordnung (6) getragen wird, und eine elektrische Schaltung (17), die elektrisch mit der leitfähigen Anordnung (8) verbunden ist, umfassen, wobei der Stift (16) konfiguriert ist, in Kontakt mit der elektrischen Schaltung (17) in der zweiten Konfiguration der Abdeckanordnung (6) zusammenzuwirken, wodurch eine elektrische Kommunikation in der leitfähigen Anordnung (8) ermöglicht wird, und konfiguriert ist, um von der elektrischen Schaltung (17) in der ersten Konfiguration beabstandet zu sein, wodurch eine elektrische Verbindung in der leitfähigen Anordnung (8) verhindert wird.

8. Elektrischer Kasten nach Anspruch 6 oder 7, wobei die elektrische Schaltung (17) elektrisch mit den elektrischen Brücken (14', 14") verbunden ist und die ersten und zweiten Elemente (11, 12) in Funktion des Zusammenwirkens des Stifts (16) mit der elektrischen Schaltung (17) entkoppelt.

9. Elektrischer Kasten nach einem der vorhergehenden Ansprüche, wobei die Verschlussanordnung (4) eine transparente Wand (4") umfasst, die fest von dem Rahmen (4') getragen wird und dem Raum (3) in der zweiten Konfiguration des Rahmens (4') zugewandt ist.

10. Elektrischer Kasten nach einem der vorhergehenden Ansprüche, wobei die Abdeckanordnung (6) durch Befestigungsmittel selektiv an der Verschlussanordnung (4) und an der Struktur (2) befestigt ist.

11. Elektrischer Kasten nach einem der vorhergehenden Ansprüche, wobei die Struktur (2) eine Parallelepipedform aufweist, die durch eine obere und eine untere Wand (2a, 2b), die entlang der vertikalen Achse (B) einander zugewandt sind, ein Paar Seitenwände (2c', 2c"), die entlang der Querachse (C) einander zugewandt sind, und durch eine Rückwand (2d) definiert ist, wobei die mindestens eine erste elektrische Steckdose (I', I") und die mindestens eine zweite elektrische Steckdose (O', O") jeweils an den unteren Wänden (2b) und an der oberen Wand (2a) realisiert sind.

12. Elektrischer Kasten nach Anspruch 11, wobei die Verschlussanordnung (4) in der zweiten Konfiguration der Rückwand (2d) zugewandt ist.

13. Elektrischer Kasten nach Anspruch 11, wobei die Abdeckanordnung (6) eine Vorderwand (6'), die der Rückwand (2d) in der zweiten Konfiguration zugewandt ist, und einen Flanschabschnitt (6"), der sich auf mindestens einem Abschnitt der Vorderwand (6') erstreckt und konfiguriert ist, um eine Befestigung der Vorderwand (6') an der Struktur (2) zu ermöglichen, umfasst.

14. Fahrzeug, umfassend mindestens ein erstes elektrisches Kabel und mindestens ein zweites elektrisches Kabel, die mit unterschiedlichen Betriebselementen des Fahrzeugs verbunden sind, und einen elektrischen Kasten (1) nach einem der vorhergehenden Ansprüche zum elektrischen Verbinden des mindestens einen ersten elektrischen Kabels und mindestens einen zweiten elektrischen Kabels miteinander.

## Revendications

1. Boîtier électrique (1) pour connecter au moins un premier câble électrique à au moins un second câble électrique, ledit boîtier électrique (1) comprenant une structure (2) s'étendant le long d'un axe longitudinal (A), d'un axe vertical (B) perpendiculaire audit axe longitudinal (A), et d'un axe transversal (C) perpendiculaire auxdits axes longitudinal et vertical (A, B), et un agencement de couverture (6) porté d'une manière mobile par ladite structure (2), ledit agencement de fermeture (4) étant configuré pour adopter une première configuration, ouverte, dans lequel un espace (3) délimité par ladite structure (2) peut communiquer avec l'environnement, et une seconde configuration, fermée, dans lequel ledit espace (3) est isolé de l'environnement, ledit boîtier électrique (1) comprenant au moins une première prise électrique (I', I") configurée pour permettre une connexion dudit au moins un premier câble électrique et au moins une seconde prise électrique (O', O") configurée pour permettre une connexion dudit au moins un second câble électrique, et une disposition conductrice (8) abritée dans ledit espace (3) et configurée pour connecter électriquement ladite au moins une première prise électrique (I', I") à ladite au moins une seconde prise électrique (O', O"), ledit boîtier électrique (1) comprenant un moyen de sécurité (15) configuré pour interrompre la connexion électrique entre ladite au moins une première prise électrique (I', I") et ladite au moins une seconde prise électrique (O', O") via ladite disposition conductrice (8) si ledit agencement de couverture (6) est dans ladite première configuration,
**caractérisé en ce que** ledit boîtier électrique (1) comprend en outre un agencement de fermeture (4) comprenant un cadre (4') porté de manière mobile par ladite structure (2) pour adopter une première configuration, fermée, dans lequel il isole ledit espace (3) de l'environnement, et une seconde configuration, ouverte, dans lequel il permet une communication dudit espace (3) et dudit environnement, ledit agencement de couverture (6) étant configuré pour entourer ledit agencement de fermeture (4) dans ladite seconde configuration.

2. Boîtier électrique selon la revendication 1, comprenant deux premières prises électriques (I', I") et deux rangées de secondes prises électriques (O', O"), ladite disposition conductrice (8) comprenant un premier chemin (8') électrique connectant électriquement une desdites premières prises électriques (I', I") à une desdites rangées de secondes prises électriques (O', O"), et un second chemin (8') électrique connectant électriquement l'autre desdites premières prises électriques (I', I") à l'autre desdites rangées de secondes prises électriques (O', O"), ledit moyen de sécurité (15) étant configuré pour interrompre la connexion électrique desdits premier et second chemins (8', 8") électriques.

3. Boîtier électrique selon la revendication 2, dans lequel lesdits premier et second chemins (8', 8") comprennent une pluralité d'éléments (11, 12, 13) conducteurs connectés électriquement ensemble.

4. Boîtier électrique selon la revendication 3, dans lequel lesdits éléments (11, 12, 13) conducteurs sont des feuilles de matériau métallique.

5. Boîtier électrique selon la revendication 3 ou 4, dans lequel lesdits éléments (11, 12, 13) conducteurs sont réalisés en cuivre.

6. Boîtier électrique selon l'une quelconque des revendications 3 à 5, dans lequel lesdits premier et second éléments (11, 12) sont connectés via des ponts électriques (14', 14").

7. Boîtier électrique selon l'une quelconque des revendications précédentes, dans lequel ledit moyen de sécurité (15) comprend une fiche (16) portée de manière fixe par ledit agencement de couverture (6) et un circuit électrique (17) connecté électriquement à ladite disposition conductrice (8), ladite fiche (16) étant configurée pour coopérer au contact avec ledit circuit électrique (17) dans ladite seconde configuration dudit agencement de couverture (6), permettant une communication électrique dans ladite disposition conductrice (8), et configurée pour être à distance dudit circuit électrique (17) dans ladite première configuration, empêchant une communication électrique dans ladite disposition conductrice (8).

8. Boîtier électrique selon la revendication 6 ou 7, dans lequel ledit circuit électrique (17) est connecté électriquement auxdits ponts électriques (14', 14") et découple lesdits premier et second éléments (11, 12) en fonction de la coopération de ladite fiche (16) avec ledit circuit électrique (17).

9. Boîtier électrique selon l'une quelconque des revendications précédentes, dans lequel ledit agencement de fermeture (4) comprend une paroi transparente (4") portée de manière fixe par ledit cadre (4') et faisant face audit espace (3) dans ladite seconde configuration dudit cadre (4').

10. Boîtier électrique selon l'une quelconque des revendications précédentes, dans lequel ledit agencement de couverture (6) est fixé de manière sélective audit agencement de fermeture (4) et à ladite structure (2) via des moyens de fixation.

11. Boîtier électrique selon l'une quelconque des revendications précédentes, dans lequel ladite structure (2) a une forme de parallélépipède définie par des parois supérieure et inférieure (2a, 2b) se faisant face le long dudit axe vertical (B), une paire de parois latérales (2c', 2c") se faisant face le long dudit axe transversal (C), une paroi arrière (2d), ladite au moins une première prise électrique (I', I") et ladite au moins une seconde prise électrique (0', O") étant réalisées respectivement sur ladite paroi inférieure (2b) et sur ladite paroi supérieure (2a).

12. Boîtier électrique selon la revendication 11, dans lequel ledit agencement de fermeture (4) fait face, dans ladite seconde configuration, à ladite paroi arrière (2d).

13. Boîtier électrique selon la revendication 11, dans lequel ledit agencement de couverture (6) comprend une paroi avant (6') faisant face à ladite paroi arrière (2d) dans ladite seconde configuration, et une partie rebord (6") s'étendant sur au moins une partie de ladite paroi avant (6') et configurée pour permettre une fixation de ladite paroi avant (6') à ladite structure (2).

14. Véhicule comprenant au moins un premier câble électrique et au moins un second câble électrique connectés à différents éléments fonctionnels dudit véhicule, et un boîtier électrique (1) selon l'une quelconque des revendications précédentes pour connecter électriquement ensemble ledit au moins un premier câble électrique et ledit au moins un second câble électrique.
